Europäisches Patentamt

European Patent Office

Office européen des brevets

(11) Publication number: **0 474 230 B1**

# EUROPEAN PATENT SPECIFICATION

(45) Date of publication of patent specification: **15.03.95**   (51) Int. Cl.6: **A23L 1/308**

(21) Application number: **91115012.6**

(22) Date of filing: **05.09.91**

The file contains technical information submitted after the application was filed and not included in this specification

(54) **Insoluble dietary fibers, method of producing the dietary fiber and foods containing the dietary fiber.**

(30) Priority: **05.09.90 JP 236726/90**
**07.03.91 JP 69087/91**

(43) Date of publication of application:
**11.03.92 Bulletin 92/11**

(45) Publication of the grant of the patent:
**15.03.95 Bulletin 95/11**

(84) Designated Contracting States:
**BE DE FR GB IT**

(56) References cited:
**EP-A- 0 363 481**
**WO-A-90/10392**

**JOURNAL OF AGRICULTURAL & FOOD CHEMISTRYvol. 8, no. 4, April 1990, pages 1142-1145, Washington, DC, US; Y.N. OH et al.:**

**"Improvement in Soluble Fiber Content of Wheat Fiber through EnzymaticModification"**

(73) Proprietor: **TERUMO KABUSHIKI KAISHA**
**No. 44-1, Hatagaya 2-chome,**
**Shibuya-ku**
**Tokyo 151 (JP)**

(72) Inventor: **Fukuyama, Kazihiro, c/o Terumo K.K.**
**1727-1, Tsuijiarai,**
**Showa-cho**
**Nakakoma-gun,**
**Yamanashi-ken (JP)**
Inventor: **Goto, Takuji, c/o Terumo K.K.**
**1727-1, Tsuijiarai,**
**Showa-cho**
**Nakakoma-gun,**
**Yamanashi-ken (JP)**
Inventor: **Kondo, Yasushi, c/o Terumo K.K.**
**1727-1, Tsuijiarai,**
**Showa-cho**
**Nakakoma-gun,**
**Yamanashi-ken (JP)**
Inventor: **Akaike, Toshiyuki, c/o Terumo K.K.**
**1727-1, Tsuijiarai,**
**Showa-cho**
**Nakakoma-gun,**
**Yamanashi-ken (JP)**

PATENT ABSTRACTS OF JAPAN vol. 12, no. 219 (C-506)(3066), 22 June 1988; & JP - A - 6317674 (TAKULT HONSHA CO. LTD.) 25.01.1988

PATENT ABSTRACTS OF JAPAN vol. 15, no. 193 (C-832)(4721), 17 May 1991; & JP - A - 49662 (NIPPON SHOKUHIN KAKOU CO. LTD.) 04.03.1991

PATENT ABSTRACTS OF JAPAN vol. 9, no. 145 (C-287)(1868), 20 June 1985; & JP - A - 6027365 (NIHON SYIYO KUHIN KAKOU K.K.) 12.02.1985

Inventor: **Nakanishi, Yoichi, c/o Terumo K.K.**
**1727-1, Tsuijiarai,**
**Showa-cho**
**Nakakoma-gun,**
**Yamanashi-ken (JP)**
Inventor: **Ueda, Yoshitsugu, c/o Terumo K.K.**
**1727-1, Tsuijiarai,**
**Showa-cho**
**Nakakoma-gun,**
**Yamanashi-ken (JP)**
Inventor: **Nakashima, Hiroshi, c/o Terumo K.K.**
**1727-1, Tsuijiarai,**
**Showa-cho**
**Nakakoma-gun,**
**Yamanashi-ken (JP)**

(74) Representative: **Casalonga, Axel et al**
**BUREAU D.A. CASALONGA - JOSSE**
**Morassistrasse 8**
**D-80469 München (DE)**

## Description

### BACKGROUND OF THE INVENTION

The present invention relates to water-insoluble dietary fibers which have both trophic effects of water-soluble dietary fibers and those of insoluble dietary fibers together, foods containing the insoluble dietary fibers and a method of producing the insoluble dietary fibers which have both trophic effects of water-soluble dietary fibers and those of insoluble dietary fibers together.

Today, dietary fibers are attracting interest as a health food, which are contained in rich amount in the hull of the seed of various kinds of grain, cereal and pulse (hereafter referred to as grain hull). The dietary fibers contained in grain hull, being insoluble by nature, have the effects of activating bowel movement and preventing large intestine cancers. On the other hand, water-soluble dietary fibers extracted from grain hull are known to have the effects of lowering serum cholesterol and prompting the proliferation of beneficial intestinal bacteria.

Since hemicellulose contained in grain hull is only slightly soluble, its physiological activity does not readily produce effect if unprocessed grain hull is ingested. The rate of hemicellulose which dissolves out from unprocessed grain hull in the alimentary canal being thus little, a large quantity of grain hull must be eaten to obtain the intended effect of the physiological activity of dietary fiber. The foods contained a large quantity of unprocessed grain hull have not good texture.

There is known as a insoluble fibers stuff made of grain hull, a fibrous foodstuff is disclosed by Japanese Patent Provisional Publication No. 17674/1988, which is crushed grain with reduced fibers lengths improving the eating texture and the increased surface area exposing more fibers.

A water-soluble fibers stuff (hemicellulose) extracted from grain hull is disclosed by Japanese Patent Provisional Publication No. 62303/1989.

The fibrous foodstuff disclosed by Japanese Patent Provisional Publication No. 17674/1988 has the effect of insoluble fibers alone because grain hull is just broken to reduce the length of fibers and increase the surface area with the nature of water-insoluble fibers unchanged.

The fibers stuff disclosed by Japanese Patent Provisional Publication No. 62303/1989 is prepared by extracting water-soluble fibers only and therefore cannot be expected to have the effect of activating bowel movement.

J. Agric. Food Chem. 38 (1990), pp. 1142-1145 discloses a mixture of soluble and insoluble fibers, the so-called "modified wheat fiber".

### SUMMARY OF THE INVENTION

The first object of the present invention is to provide insoluble dietary fibers which have the properties of insoluble dietary fibers and those of water-soluble dietary fibers together, and thereby produce the effects of activating bowel movement of insoluble dietary fibers and the effects of the lowering the blood cholesterol level of soluble fibers.

The second object of the present invention is to provide the method of preparing the above insoluble dietary fiber.

The third object of the present invention is to provide foods which contain the above insoluble dietary fiber.

The first object of the present invention is attained by the insoluble dietary fibers which are derived from grain hull and have the solubilization rate by hemicellulase of equal to or greater than 30 wt% of the insoluble dietary fibers.

The second object of the present invention is attained by the method of preparing the insoluble dietary fibers have a partial hydrolyzing treatment for a raw material of dietary fibers, the treatment is carried out so that the recovery rate after a hydrolyzing treatment is 40 wt% to 80 wt%.

The third object of the present invention is attained by foods which contain the insoluble dietary fibers of the present invention as one ingredient.

### BRIEF DESCRIPTION OF THE DRAWINGS

Figure 1 shows the blood cholesterol levels of rats fed with the formula food containing the insoluble fibers of the present invention and those fed with comparative food.

Figure 2 shows the quantities of feces of rats fed with the formula food containing the insoluble fibers of the present invention and those fed with comparative food.

Figure 3 shows the relationship between the recovery rate after a partial hydrolyzing treatment of the insoluble dietary fibers as an embodiment of the present invention and that of a comparative example and the solubilization rate by hemicellulase.

DETAILED DESCRIPTION

The insoluble dietary fibers of the present invention are described below.

The fibers of the present invention are dietary fibers derived from grain hull, whose solubilization rate by hemicellulase is greater than 30% by weight.

In the present invention "grain hull" means the parts so called bran, that is, the outer covering of the seed of cereals and pulses such as corn, wheat, rice and soybean, including other plants of Gramineae, Legume and Polygonaceae. The grain hull is mainly made of insoluble fibers and includes, in a large proportion, cellulose which is insoluble and hard-to-solubilize fibers content and hemicellulose which has comparatively good affinity for water and can be solubilized comparatively easily.

Further in the present invention "insoluble fibers" means the fibrous substance contained in the insoluble residue fraction when suspending fibrous foodstuffs in water and centrifuging them (by 1,000 G for 10 min). The weight of the fibers in the insoluble fraction can be determined by the enzyme weight method (N. G. Asp et al.: J. Food Chem. 31 (1983), 476).

Hemicellulase is a hydrolaze which acts upon the substrate hemicellulose content in grain hull. For measurement of the solubilization rate by hemicellulase, HEMICELLULASE M from Tanabe Seiyaku Co., Ltd. is available for example. Although there is no dietary fibers decomposition enzyme contained in the human digestive fluid, some intestinal bacteria have the action of cellulase or hemicellulase. However, the insoluble dietary fibers in the fibrous stuff prepared by just crushing grain hull remain completely insoluble as they are and their solubilization rate by hemicellulase is very low.

The chemical reason why the dietary fibrous stuff of the present invention has a solubilization rate by hemicellulase greater than 30 wt% of the insoluble dietary fibers despite its insolubility has not yet been elucidated completely, but is supposed as follows. While hemicellulose is enclosed or strongly bound by insoluble cellulose in the fibrous stuff prepared by just breaking grain hull. In the insoluble fibers in the fibrous stuff of the present invention, hemicellulose partly exposes on the surface of the insoluble fibers. The dietary fibers of the present invention thereby thus have a solubilization rate by hemicellulase of equal to or greater than 30 wt% of the stuff, notwithstanding it is insoluble fibers derived form the grain hull. Being thus susceptive to the action of hemicellulase, a dietary fibers decomposition enzyme, the fibrous stuff of the present invention is easily solubilized by hemicellulase secreted by intestinal bacteria in the alimentary canal and produces the same effect of lowering the blood cholesterol level as that of soluble fibers. If the solubilization rate by hemicellulase is below 30 wt%, the effect of lowering the blood cholesterol level is not sufficient. In the present invention, the solubilization rate by hemicellulase is determined by incubating the insoluble fibers along with the enzyme (pH 4.5, 40 °c and the enzyme to substrate ratio 1:10), centrifuging the liquid and then measuring the quantity of saccharides contained in the supernatant fraction (measured by the phenol-sulfuric acid method) or the decrease of the weight of solid matter in the residue fraction.

The insoluble dietary fibers of the present invention have the solubilization rate by hemicellulase of equal to or greater than 30 wt% of the insoluble dietary fibers, preferably from 30 wt% to 55 wt% of the whole stuff and on the other hand have completely insoluble content (cellulose) of equal to or smaller than 60 wt%, preferably from 30 wt% to 60 wt%. The dietary fibers of the present invention therefore produce the same effect of activating bowel movement as that of insoluble fibers.

Further, the insoluble dietary fibers of the present invention are much more susceptible to the enzyme action of hemicellulase than simply broken grain hull and thereby have the properties and effects similar to those of soluble fibers, notwithstanding hemicellulose is bound to insoluble particles in this fiber.

Further, the insoluble dietary fibrous stuff of the present invention is preferably in the form of small particles easy to add to various foodstuffs. The size of particles is preferably equal to or smaller than 350 μm and more preferably up to 100 μm. Furthermore, the insoluble dietary fibrous stuff of the present invention may be dispersion in an aqueous liquid such as water, but is preferably in the form of dry matter easy to add to various foodstuffs. When in a dehydrated state, the solubilization rate by hemicellulase of the stuff of the present invention is still required to be equal to or greater than 30 wt% of the stuff by weight.

The dietary fibers of the present invention have a sedimentation volume in water equal to or greater than 20 ml per gram. This volume indicates a higher water content or water-binding capacity of the dietary fibers as it is greater. The dietary fibers having the sedimentation volume above 20 ml/g have soft and pleasant to the palate. The water-binding capacity of the dietary fibers can decrease according to the drying conditions. To prevent the decrease of the water-binding capacity when drying, saccharides such as cane sugar, dextrin or glucose or foodstuffs containing saccharides such as cow's milk may be added to the fiber. When using freeze-drying or spray-drying for the drying method, a dry matter with a high water-binding capacity is obtained without the addition of saccharides and foodstuffs containing saccharides.

The "sedimentation volume in water" of the present invention is the volume of deposited matter measured by suspending the fibers stuff (1 g in solid matter) in 50 ml distilled water and deairing the suspension, then putting it in a graduated cylinder and adding a sufficient amount of water, leaving it overnight to settle the suspensoid to the bottom with the water content equilibrated.

The insoluble dietary fibers of the present invention can be added to various kinds of drinks (soft drinks, cocoa, for example), instant soup, baked cake and so on. The quantity to add is preferably about 1 wt% to 90 wt% of the weight of foods, though it varies depending on foods.

Next described below is the method of preparing the insoluble dietary fibers of the present invention.

First, the broken hull of grain, for example, corn, wheat, rice or soybean is ground by means of colloid mill, jet mill, coffee mill or the like in dry or wet process. After washed in water, the powder is centrifuged to separate the insoluble fibrous substance by removing the soluble fraction containing starch and other components. The hull of grain above means the parts so called bran, that is, the outer covering of the seed of cereals and pulses such as corn, wheat, rice and soybean, including other plants of Gramineae, Legume and Polygonaceae. The grain hull is mainly made of insoluble fibrous substance which includes, in a large proportion, cellulose which is insoluble and hard-to-solubilize fibers content and hemicellulose which has comparatively good affinity for water and can be solubilized.

The above insoluble fibers mean the fibrous substance contained in the insoluble residue fraction when suspending dietary fibrous stuff in water and centrifuging it (by 1,000 G for 10 min). The weight of the dietary fibers in the insoluble fraction can be determined by the enzyme weight method (N. G. Asp et al.: J. Food Chem. 31 (1983), 476).

The insoluble fibrous substance thus obtained is then subjected to a partial hydrolyzing treatment. This partial hydrolyzing treatment is carried out so that the recovery rate after the partial hydrolyzing treatment is 40% to 80% by weight. The recovery rate after the partial hydrolyzing treatment means the ratio in percentage of the residue after the hydrolyzing treatment (weight of insoluble fibers) to the residue after washing broken grain hull in warm water and then removing the soluble fraction (weight of fibrous substance as the raw material). The washing in warm water may be carried out simultaneously with the hydrolyzing treatment. In this case too, the residue after washing broken grain hull in warm water and then removing the soluble fraction is used to calculate the recovery rate.

By this partial hydrolyzing treatment, 30 wt% or more of the insoluble dietary fibers become to increase solubility by hemicellulase after the treatment. Insoluble dietary fibers with this hemicellulase-solubilization property produces the same effect of lowering the blood cholesterol level as that of soluble dietary fibers by the action of the hemicellulose in them which is decomposed by the action of the hemicellulase secreted by certain intestinal bacteria in the alimentary canal and changed into soluble dietary fibers. They also have the effect of activating bowel movement of insoluble dietary fibers content.

Grain hull contains insoluble fibers of cellulose and solubilizable fibers of hemicellulose. The hemicellulose in grain hull is insoluble in the normal state, in which the hemicellulose is thought to be enclosed or strongly bound by insoluble cellulose. The hemicellulose becomes solubilizable by the hydrolyzing treatment and it is thought that the hemicellulose is let loose by hydrolysis. Therefore, if thoroughly hydrolyzed, all the hemicellulose becomes loose to dissolve out from the grain hull and only insoluble cellulose remains. The resultant dietary fibers stuff therefore has only the effects of insoluble dietary fibers. Thus it is found in this invention that the dietary fibers stuff which has 30 wt% or greater solubilization rate and the effects not only of insoluble dietary fibers but also of soluble dietary fibers can be obtained by a partial, not a through, hydrolyzing treatment and particularly by such a partial hydrolyzing treatment as the recovery rate after the treatment is 40% to 80% by weight reliably.

Hemicellulase is a dietary fibers decomposition enzyme which hydrolyzes the substrate hemicellulose content in grain hull. For measurement of the solubilization rate by hemicellulase, HEMICELLULASE M from Tanabe Seiyaku Co., Ltd. is available for example. Although there is no dietary fibers decomposition enzyme contained in the human digestive fluid, some intestinal bacteria have the action of cellulase or hemicellulase. However, insoluble dietary fibers in the fibrous stuff prepared by just crushing grain hull remain completely insoluble as they are and their solubilization rate by hemicellulase is as low as 10 wt% to 20 wt%.

The chemical reason why the dietary fibers of the present invention have a high solubilization rate by hemicellulase despite the insoluble state has not yet been elucidated completely, but is supposed as follows. While hemicellulose is enclosed or strongly bound by insoluble cellulose in the fibrous stuff prepared by just breaking grain hull, it is exposed on the surface of cellulose forming insoluble fibers in the dietary fibers obtained by the method of the present invention. The dietary fibers prepared by the present invention thereby have a solubilization rate by hemicellulase of equal to or greater than 30 wt% of the stuff, notwithstanding it is insoluble fibers derived form the grain hull. Being thus susceptive to the action of hemicellulase, a dietary fibers decomposition enzyme, the dietary fibers of the present invention are easily solubilized by hemicellulase secreted by intestinal bacteria in the alimentary canal and produce the same effect of lowering the blood cholesterol level as that of soluble fibers. If the solubilization rate by hemicellulase is below 30 wt% of the insoluble dietary fibers, the effect of lowering the blood cholesterol level is not sufficient.

In the present invention, the solubilization rate by hemicellulase is obtained by incubating insoluble fibers along with the enzyme for 15 hours (pH 4.5, 40 °c and the enzyme to substrate ratio 1:10), centrifuging the solution, then measuring the quantity of saccharides contained in the supernatant fraction (determined by the phenol-sulfuric acid method) or the decrease of the weight of solid matter in the residue fraction.

The insoluble dietary fibers obtained by the method of the present invention have the solubilization rate by hemicellulase of equal to or greater than 30 wt% of the insoluble dietary fibers, preferably from 30 wt% to 55 wt% and on the other hand have the completely insoluble content (cellulose) of equal to or smaller than 60 wt%, preferably 30 wt% to 60 wt%. The insoluble dietary fibers obtained by the method of the present invention thereby produce the same effect of activating bowel movement as that of insoluble fibers.

Further, the insoluble dietary fibers obtained by the method of present invention are much more susceptible to the enzyme action of hemicellulase than simply broken grain hull and thereby have the properties and effects similar to those of soluble fibers, notwithstanding hemicellulose is bound to insoluble particles in this dietary fiber.

Further, the insoluble dietary fibers obtained by the method of the present invention are in the form of small particles easy to add to various foodstuffs. The size of particles is preferably equal to or smaller than 350 $\mu$m, and more preferably equal or smaller than 250 $\mu$m.

Furthermore, the insoluble dietary fibers obtained by the method of the present invention may be dispersion in an aqueous liquid such as water, but is preferably in the form of dry matter. When in the form of dry matter, the solubilization rate by hemicellulase is preferably 30 wt% or greater.

The partial hydrolyzing treatment of the method of the present invention is carried out preferably by warming-acid-treatment of the raw dietary fibers extracted from grain hull at a pH of 3.0 or smaller and a temperature of 60 to 100 °c.

More specifically, an acidic solution of citric acid, sulfuric acid or the like is added to the insoluble fibrous substance with the soluble fraction containing starch and other contents removed by centrifuging and the fibers are suspend so that the remaining fibrous solid matter is 5 wt% to 30 wt%, preferably 10 wt% to 25 wt% and the pH is 3.0 or smaller, preferably 0.4 to 3.0. If the pH is 0.4 or greater, there is no need of adding a large quantity of alkali for neutralization. If the pH is 3.0 or smaller, the treating temperature must not be raised so high and the problems of denatured coloring and deteriorated smell. A more preferable range of pH is 1.0 to 2.5.

The temperature for the partial hydrolyzing treatment is 60 to 100 °c and preferably 70 to 90 °c. If the treatment is carried out at 100 °c or a lower temperature, the problems of denatured coloring and deteriorated smell are prevented.

The length of time of the partial hydrolyzing treatment is 30 to 150 min depending on the pH of the suspension and the temperature of treatment.

The extent of the partial hydrolyzing treatment is within such a range as the recovery rate after the treatment is 40 wt% to 80 wt% and more preferably 60 wt% to 80 wt%. By this extent of partial hydrolyzing treatment, the solubilization rate by hemicellulase of the insoluble dietary fibers obtained becomes 30% or greater of the whole weight.

After the partial hydrolyzing treatment, the suspension is cooled to a room temperature and neutralized using sodium hydroxide, for example.

After the above partial hydrolyzing process, the resultant product is washed to remove soluble fibrous substance 1 to 5 times by centrifugal washing with distilled water so that the concentration of solid matter is 20 to 50 wt%. The solid matter is dried by freeze-drying, vacuum drying, fluidized-bed drying, spray-drying, air drying or the like and then ground by coffee mill, for example. Thus the dietary fibers of the present invention are obtained in dry matter.

The solid matter may also be dried after adding saccharides such as cane sugar, dextrin or glucose to the suspension containing the solid matter suspending at the rate of 1 to 4 parts per 1 part of the solid matter by weight and blending well to dissolve the saccharides. By this additional treatment, the modified dietary fibers are more stabilized.

The insoluble dietary fibers obtained by the method of the present invention can be added to various kinds of drinks (soft drinks, cocoa, for example), instant soup, baked cake and so on. The quantity to add is preferably about 1% to 90% of the weight of foods, though it varies depending on foods.

EXAMPLES

Hereinafter described are examples of the insoluble dietary fibers and comparative insoluble dietary fiber.

Examples 1 to 6 and 20

Powder of crushed corn husks of 0.5 mm or smaller particle size was suspended in water with the solid matter concentration of 10 wt% and was ground to the average particle size of 40 $\mu$m using a wet grinder. This suspension was then centrifuged to separate insoluble fiber. The separated insoluble fibers were washed, and water and citric acid were added to the insoluble fibers to make dispersion in which 5 wt% of the fibrous solid matter, then the separated insoluble fibers were dispersed again. Here, suspensions with the values of pH as shown in Table 1 were prepared using citric acid of different concentrations. These suspensions were heated at 120 °c for 30 min, cooled down to a room temperature, then neutralized to pH 7 using sodium hydroxide. Each suspension was centrifuged to separate insoluble fiber. Added to the separated insoluble fibers were water of 10 times the volume of that fiber. The dispersion was then centrifuged (5,000 G, 30 min) again. The solid matter content after the centrifugation was about 25 wt% respectively. These solid matters were dried by freeze-drying and ground by a coffee mill. Thus obtained were the samples of the insoluble dietary fibers of the present invention in powder (examples 1 to 6 and 20). These samples were suspended in water and hemicellulase was added to the suspensions to measure the solubilization rate. The solubilization rates measured are shown in Table 1.

The hemicellulase-solubilization rate can be measured as follows.

Two test samples of the insoluble dietary fibers are incubated with and without hemicellulase (HEMICELLULASE M, for example), respectively. The insoluble solid matter of each sample is separated by centrifugation and dried. The difference of the dry weight of the solid matters from both samples is measured for the weight of the hemicellulase-solubilized fraction. Instead of measuring the difference of the dry weight of the solid matters from both samples, the difference of the quantity of saccharides contained in the supernatant fraction may be measured by the phenol-sulfuric acid method for the weight of the hemicellulase-solubilized fraction (glucose, for example, can be used as the reference substance for determining the quantity of saccharides). Further, the weight of the insoluble fibers is measured by the enzyme weight method. The hemicellulase-solubilization rate is then calculated by the equation below.

$$\text{Hemicellulase solubilization rate} = \frac{\text{Weight of hemicellulase solubilized fraction}}{\text{Weight of insoluble fibers}} \times 100 \ (\%)$$

The hemicellulase-solubilization rate of the following examples and comparative examples was calculated by using HEMICELLULASE M and incubating samples with and without hemicellulase for 15 hours (pH 4.5, 40 $\mu$m and the enzyme to substrate ratio 10 : 1), separating insoluble solid matter by centrifugation and drying the separated solid matter, then measuring the difference of the dry weight of the solid matters from both samples for the weight of the hemicellulase-solubilized fraction. The in-water-sedimentation volumes were also measured and shown in Table 1.

The powder samples of the insoluble dietary fibers of examples 1 to 6 and 20 were readily dispersed in water and had a soft and smooth feeling with no nasty flavor. They could be added to and drunk with milk and other various drinks.

Table 1

|  | pH | Hemicellulase solubilization rate (Dry matter, %) | In-water-sedimentation volume (Dry matter, ml/g) |
|---|---|---|---|
| Ex. 1 | 3.9 | 37 | 18 |
| Ex. 2 | 3.5 | 40 | 18 |
| Ex. 3 | 3.2 | 42 | 20 |
| Ex. 4 | 2.7 | 56 | 22 |
| Ex. 5 | 2.5 | 50 | 25 |
| Ex. 6 | 2.3 | 41 | 30 |
| Ex. 20 | 2.2 | 31 | 30 |

Examples 7 to 10

Powder of crushed corn husks of 0.5 mm or smaller particle size was suspended in water with the solid matter concentration of 10 wt% and was ground to the average particle size of 40 $\mu$m using a wet grinder. This suspension was then centrifuged to separate insoluble fiber. The separated insoluble fibers were washed, and water and citric acid were added to disperse the insoluble fibers again with the fibrous solid matter content of 5 wt%. Here, suspensions with the values of pH as shown in Table 2 were prepared using citric acid of different concentrations. These suspensions were heated at 120 °c for 30 min, cooled down to a room temperature, then neutralized to pH 7 using sodium hydroxide. Each suspension was centrifuged to separate insoluble fiber. Added to the separated insoluble fibers were water of 10 times the volume of that fiber. The dispersion was then centrifuged (5,000 G, 30 min) again. The solid matter content after the centrifugation was about 25 wt% respectively. Then, powder dextrin of the quantity as shown Table 2 with respect to one part of the solid matter was added to each solid matter. These solid matters were then dried by freeze-drying and ground by a coffee mill. Thus obtained were the samples of the insoluble dietary fibers of the present invention in powder (examples 7 to 10).

These samples were washed to remove the dextrin by centrifugal washing with water and hemicellulase was added to measure the solubilization rate. The solubilization rates measured were shown in Table 2. The in-water-sedimentation volumes were also measured and shown in Table 2. The powder samples of the insoluble dietary fibers of examples 7 to 10 were readily dispersed in water and had a soft and smooth feeling with no nasty flavor. They could be added to and drunk with milk and other various drinks. Example 9 having high in-water-sedimentation volumes has a soft and smooth texture and good dispensibility than example 8.

Table 2

|  | pH | Hemicellulase solubilization rate (Dry matter, %) | In-water-sedimentation volume (Dry matter,ml/g) | Quantity of dextrin added |
|---|---|---|---|---|
| Ex. 7 | 3.5 | 42 | 25 | 4 parts |
| Ex. 8 | 2.7 | 61 | 33 | 1 part |
| Ex. 9 | 2.7 | 61 | 45 | 4 parts |
| Ex.10 | 2.3 | 44 | 60 | 4 parts |

Examples 11 to 14

Powder of crushed corn husks of 0.5 mm or smaller particle size was suspended in water with the solid matter concentration of 10 wt% and was ground to the average particle size of 40 $\mu$m using a wet grinder. This suspension was then centrifuged to separate insoluble fiber. The separated insoluble fibers were washed, and water and citric acid were added to disperse the insoluble fibers again with the fibrous solid matter content of 5 wt%. Here, suspensions with the values of pH as shown in Table 3 were prepared using citric acid of different concentrations. These suspensions were heated at 120 °c for 30 min, cooled down to a room temperature, then neutralized to pH 7 using sodium hydroxide. Each suspension was centrifuged to separate insoluble fiber. Added to the separated insoluble fibers were water of 10 times the volume of that fiber. The dispersion was then centrifuged (5,000 G, 30 min) again. The solid matter content after the centrifugation was about 25 wt% respectively. These solid matters were then heated at 60 °c and dried by vacuum drying. The dry matters obtained were ground by a coffee mill, and each powder was separated by means of a 60-mesh sieve into coarse particles (60 mesh, on) (examples 12 and 14) and fine particles (60 mesh, passed) (examples 11 and 13). The resultant powder samples were then suspended in water, and hemicellulase was added to measure the solubilization rate. The solubilization rates measured were shown in Table 3. The in-water-sedimentation volumes were also measured and shown in Table 3.

Examples 11 and 14 had smaller solubilization rates and in-water-sedimentation volumes than examples 1 to 10. Their dispersibilities were also lower than those of examples 1 to 10. Their feeling was also slightly inferior. However, the fine powder samples showed comparatively high solubilization rates.

Table 3

|  | pH | Hemicellulase solubilization rate (Dry matter,%) | In-water-sedimentation volume (Dry matter,ml/g) | Particle size |
|---|---|---|---|---|
| Ex. 11 | 3.5 | 39 | 12 | 60 mesh, Passed |
| Ex. 12 | 3.5 | 33 | 7 | 60 mesh, On |
| Ex. 13 | 2.7 | 48 | 17 | 60 mesh, Passed |
| Ex. 14 | 2.7 | 37 | 15 | 60 mesh, On |

Example 15

Powder of crushed corn husks of 0.5 mm or smaller particle size was suspended in water with the solid matter concentration of 10 wt% and was ground to the average particle size of 40 $\mu$m using a wet grinder. This suspension was then centrifuged to separate insoluble fiber. The separated insoluble fibers were washed, and water and citric acid were added to disperse the insoluble fibers again with the fibrous solid matter content of 5 wt%. This suspension was heated at 140 °c for 30 min and cooled down to a room temperature. The resultant suspension was centrifuged to separate insoluble fiber. Added to the separated insoluble fibers were water of 10 times the volume of that fiber. The dispersion was then centrifuged (5,000 G, 30 min) again. The solid matter content after the centrifugation was about 25 wt%.

The solid matter was dried by freeze-drying and ground by a coffee mill. Thus obtained was a powder sample of the insoluble dietary fibers of the present invention (example 15). This powder sample was dispersed in water and hemicellulase was added to measure the solubilization rate. The solubilization rates measured were shown in Table 4. The in-water-sedimentation volume was also measured and shown in Table 4.

Table 4

|  | pH | Hemicellulase solubilization rate (Dry matter, %) | In-water-sedimentation volume (Dry matter, ml/g) |
|---|---|---|---|
| Ex. 15 | 4.5 | 54 | 23 |

Example 16

Added to one part of the powder of the insoluble dietary fibers of the present invention obtained by example 4, strawberry powder 0.6 parts, sugar 0.8 parts, powdered milk 0.5 parts, malic acid 0.03 parts, powdered yogurt 0.05 parts to make a beverage powder. This beverage powder had the flavor of yogurt in addition to the flavor of milk and was suited for a food containing dietary fiber.

Example 17

500 g of the dietary fibers prepared by example 1, 407.5 g sorbitol (SORBIT, Nikken Chemical), 20 g emulsifier (sucrose-fatty acid ester, DK ESTER F-20-W, Daiichi Kogyo Seiyaku), 40 g orange flavor (mixture of 20 g orange flavoring agent from SUNFIX ORANGE JP, Sanei Chemical and 20 g powdered orange juice from Yaizu Suisan kako), 30 g acidulant (citric acid, Wako Pure Chemical) and 2.5 g sweetening (ADMILON, Maruzen Kasei) were mixed and then formed into tablets of about 20 mm in diameter and 7 mm in thickness by a tablet forming machine (8-F-3, Kikusui Seisakusho).

Example 18

69 g of the dietary fibers prepared by example 1, 226 g strong flour, 69 g shortening, 4.8 g salt, 9 g powdered malt extract, 3 g conditioner (BANUP, Japan Pulse Guard), 0.5 g perfume, 4 g yeast (dry yeast, Oriental East) and water were mixed. The mixture was put in a incubator to cause to undergo the primary and secondary fermentation, and then baked in an oven into a grissini.

Example 19

5,000 g of the dietary fibers prepared by example 1, 200 g powdered fatty acid (mixture of EMAFAT CO from Riken Vitamin and MAGIC FAT from Japan Beatream), 50 g emulsifier (TURU LECITHIN SLP-WHITE SP, Turu Lecithin Kogyo), 2,000 g chemically modified starch (MATUNORIN M, Matutani Kagaku Kogyo), 2,100 g wheat flour, 500 salt, 100 sugar and 50 g perfume were mixed. The mixture was put in a two-axle extruder (Kowa Kogyo), 10 wt% to 30 wt% water was added to the mixture, and the mixture was extruded into sticks.

Comparative Example 1

Powder of insoluble dietary fibers (comparative example 1) was prepared by the same process as example 1 except that the addition of citric acid and the heating at 120 °c for 30 min were not conducted.

Comparative Example 2

Powder of insoluble dietary fibers (comparative example 2) was prepared by the same process as example 1 except that the addition of citric acid was not conducted.

Comparative Example 3

Powder of insoluble dietary fibers (comparative example 3) was prepared by the same process as example 7 except that the addition of citric acid was not conducted.

Comparative Example 4

Powder of insoluble dietary fibers (comparative example 4) was prepared by the same process as example 11 except that the addition of citric acid was not conducted.

Comparative Example 5

Powder of insoluble dietary fibers (comparative example 5) was prepared by the same process as example 12 except that the addition of citric acid was not conducted.

The hemicellulase-solubilization rates and the in-water-sedimentation volumes of the powder of insoluble dietary fibers of comparative examples 1 to 5 are shown in Table 5. In Table 5, comparative example 6 shows the hemicellulase-solubilization rate and the in-water-sedimentation volume of dry crushed corn husks powder of 0.5 mm or smaller particle size used example 1.

Table 5

| | pH | Hemicellulase solubilization rate (Dry matter, %) | In-water-sedimentation volume (Dry matter, ml/g) |
|---|---|---|---|
| Com. Ex. 1 | 4.5 | 17 | 12 |
| Com. Ex. 2 | 4.5 | 22 | 16 |
| Com. Ex. 3 | 4.5 | 26 | 20 |
| Com. Ex. 4 | 4.5 | 24 | 10 |
| Com. Ex. 5 | 4.5 | 22 | 5 |
| Com. Ex. 6 | 4.5 | 6 | 5 |

As clearly known from the results of the measurement, the hemicellulase-solubilization rates and the in-water-sedimentation volumes of the powder of insoluble dietary fibers of comparative examples 1 to 6 are lower than those of the powder of insoluble dietary fibers of the examples of the present invention.

Experiments

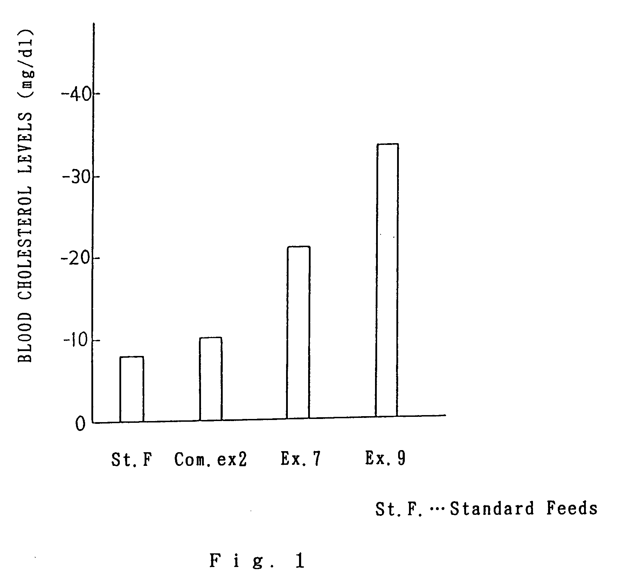

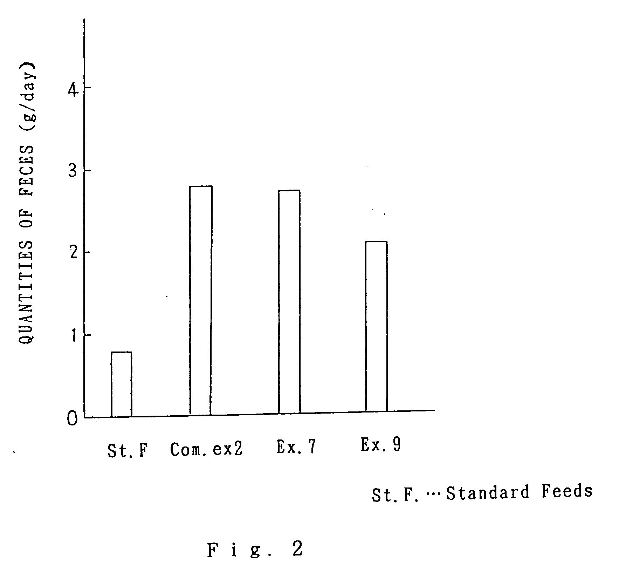

Sucrose of 3 times the weight of the powder was added to the powder samples (fibrous solid matter) of insoluble dietary fibers of examples 7 to 9 and comparative example 2 and these samples were freeze dried. Standard feeds and test feeds containing 10 wt% of fibers were prepared for animal experiments according to the compositions shown in Table 6 using these dry powder samples. Each feed was fed to rats for 10 days, measuring the blood cholesterol level and amount of feces. The blood cholesterol level is shown in Figure 1. It is known that examples 7 and 9 produced a conspicuous effect of lowering the blood cholesterol level. The amount of feces of the rats is shown in Figure 2. Comparative example 2 caused a conspicuous increase of the amount of feces, but examples 7 and 9 also had the effect of increasing the amount of feces not so much different from that of example 2.

Table 6 (Feed Composition for Animal Experiments)

| Content | Composition (%) | |
|---|---|---|
| | Standard feeds | Feeds containing dietary fibers |
| Casein | 22 | 22 |
| Corn oil | 1 | 1 |
| Lard | 9 | 9 |
| Cane sugar | 62.85 | 48.95 |
| Vitamin mixture | 1 | 1 |
| Mineral mixture | 4 | 4 |
| Yurin chloride | 0.15 | 0.15 |
| Fiber powder | 0 | 11.8* |

* This quantity of the dietary fibers was determined so that the dietary fibers content of the feed was 10 wt%, based on the fibers content of the dietary fibers powder of 84.7 wt%.

Example 21

Powder of crushed corn husks of 1.25 mm or smaller particle size was suspended in water with the solid matter concentration of 10 wt% and was heated at 90 °c for 30 min. Next, the solid matter was recovered by means of continuous centrifugal separator (3,000 G) to remove the contents which were solubilized by heating. The recovery rate of the solid matter was about 90 wt% to 95 wt%. The fibers content of the corn husk powder after this treatment was 85 wt%.

The corn husk powder thus obtained was dispersed in 1N sulfuric acid solution (pH 1.4) to have a solid matter concentration of 10 wt%, heated to 80 °c, and kept for 60 min to partly hydrolyze. The dispersion was then cooled to 60 °c and adjusted to pH 6 with sodium hydroxide. Next, this dispersion was centrifuged (3,000 G) to recover the solid matter. The solid matter recovered was subjected to dilution with water of 10 times the volume of the solid matter and recovery by centrifugation three times, and then dried using a fluidized bed drier. Thus obtained was the dry powder of insoluble dietary fibers (example 21). The recovery rate of this insoluble dietary fibers was 57 wt% of the corn husks and was 70 wt% of the raw stuff before the partial hydrolyzing treatment. The hemicellulase solubilization rate of this insoluble dietary fibers was 33 wt%. The hemicellulase-solubilization rate was measured by adding HEMICELLULASE M (enzyme to substrate ratio 10%) to the suspension of the insoluble dietary fibers prepared by examples 21 to 6, incubating at 40 °c for 15 hours, centrifuging the suspension, and measuring the sugar content in the supernatant fraction by the the phenol-sulfuric method. Glucose was used for the reference substance for determining the sugar content. The powder of insoluble dietary fibers prepared by the method of example 21 was readily dispersed in water and had a soft and smooth texture with no nasty flavor. It could be added to and drunk with milk and other various drinks.

Examples 22, 23 and Comparison Examples 7 to 12

The insoluble dietary fibers of the present invention (examples 22 and 23) and comparative insoluble dietary fibers (comparative examples 7 to 12) were prepared by the same method as that of example 21 except that corn husk powder with the average particle size of 1.0 mm was used, that the partial hydrolyzing treatment was conducted at the pH shown in Table 7 heating to 60 °c and keeping for 60 min, and that the drying method used was vacuums drying. The recovery rate after the partial hydrolyzing treatment and hemicellulase-solubilization rate of each example was shown in Table 7.

Table 7

| (60 °c, 60 min) | | | |
|---|---|---|---|
| | pH | Recovery rate (%) | Solubilization rate (%) |
| Ex. 22 | 0.68 | 84.29 | 31.2 |
| Ex. 23 | 0.40 | 76.04 | 47.5 |
| Com.ex. 7 | 4.28 | 98.32 | 18.6 |
| Com.ex. 8 | 2.54 | 97.42 | 20.0 |
| Com.ex. 9 | 2.02 | 96.40 | 21.1 |
| Com.ex.10 | 1.65 | 95.52 | 21.2 |
| Com.ex.11 | 1.31 | 93.84 | 21.8 |
| Com.ex.12 | 0.97 | 89.66 | 23.9 |

Examples 24 to 26 and Comparison Examples 13 to 17

The insoluble dietary fibers of the present invention (examples 24 to 26) and comparative insoluble dietary fibers (comparative examples 13 to 17) were prepared by the same method as that of example 21 except that corn husk powder with the average particle size of 1.0 mm was used, that the partial hydrolyzing treatment was conducted at the pH shown in Table 8 heating to 70 °c and keeping for 60 min, and that the drying method used was vacuums drying. The recovery rate after the partial hydrolyzing treatment and hemicellulase-solubilization rate of each example was shown in Table 8.

Table 8

| (70 °c, 60 min) | | | |
|---|---|---|---|
| | pH | Recovery rate (%) | Solubilization rate (%) |
| Ex. 24 | 0.97 | 79.29 | 37.1 |
| Ex. 25 | 0.72 | 70.80 | 52.6 |
| Ex. 26 | 0.44 | 53.22 | 47.1 |
| Com.ex.13 | 4.69 | 96.90 | 18.7 |
| Com.ex.14 | 2.60 | 95.90 | 20.4 |
| Com.ex.15 | 2.05 | 94.21 | 21.7 |
| Com.ex.16 | 1.69 | 92.17 | 22.4 |
| Com.ex.17 | 1.31 | 87.25 | 24.9 |

Examples 27 and 28 and Comparison Examples 18 to 23

The insoluble dietary fibers of the present invention (examples 27 and 28) and comparative insoluble dietary fibers (comparative examples 18 to 23) were prepared by the same method as that of example 21 except that corn husk powder with the average particle size of 1.0 mm was used, that the partial hydrolyzing treatment was conducted at the pH shown in Table 9 heating to 75 °c and keeping for 60 min, and that the drying method used was vacuums drying. The recovery rate after the partial hydrolyzing treatment and hemicellulase-solubilization rate of each example was shown in Table 9.

Table 9

| (75 °c, 60 min) | | | |
|---|---|---|---|
| | pH | Recovery rate (%) | Solubilization rate (%) |
| Ex. 27 | 0.99 | 71.56 | 46.9 |
| Ex. 28 | 0.73 | 57.01 | 50.3 |
| Com.ex.18 | 4.55 | 94.92 | 17.5 |
| Com.ex.19 | 2.71 | 93.08 | 19.5 |
| Com.ex.20 | 2.12 | 90.31 | 20.1 |
| Com.ex.21 | 1.73 | 87.27 | 20.6 |
| Com.ex.22 | 1.42 | 81.32 | 26.1 |
| Com.ex.23 | 0.43 | 35.68 | 24.4 |

Examples 29 to 31 and Comparison Examples 24 to 28

The insoluble dietary fibers of the present invention (examples 29 to 31) and comparative insoluble dietary fibers (comparative examples 24 to 28) were prepared by the same method as that of example 21 except that corn husk powder with the average particle size of 1.0 mm was used, that the partial hydrolyzing treatment was conducted at the pH shown in Table 10 heating to 80 °c and keeping for 60 min, and that the drying method used was vacuums drying. The recovery rate after the partial hydrolyzing treatment and hemicellulase-solubilization rate of each example was shown in Table 10.

Table 10

| (80 °c, 60 min) | | | |
|---|---|---|---|
| | pH | Recovery rate (%) | Solubilization rate (%) |
| Ex. 29 | 1.37 | 76.60 | 33.2 |
| Ex. 30 | 0.97 | 61.97 | 51.6 |
| Ex. 31 | 0.68 | 39.72 | 31.6 |
| Com.ex.24 | 4.51 | 93.95 | 16.8 |
| Com.ex.25 | 2.74 | 92.37 | 18.8 |
| Com.ex.26 | 2.07 | 86.84 | 19.6 |
| Com.ex.27 | 1.71 | 82.79 | 23.3 |
| Com.ex.28 | 0.41 | 30.54 | 11.9 |

Examples 32 to 34 and Comparison Examples 29 to 33

The insoluble dietary fibers of the present invention (examples 32 to 34) and comparative insoluble dietary fibers (comparative examples 29 to 33) were prepared by the same method as that of example 21 except that corn husk powder with the average particle size of 1.0 mm was used, that the partial hydrolyzing treatment was conducted at the pH shown in Table 11 heating to 85 °c and keeping for 60 min, and that the drying method used was vacuums drying. The recovery rate after the partial hydrolyzing treatment and hemicellulase-solubilization rate of each example was shown in Table 11.

Table 11

| (85 °c, 60 min) | | | |
|---|---|---|---|
| | pH | Recovery rate (%) | Solubilization rate (%) |
| Ex. 32 | 1.78 | 79.52 | 30.7 |
| Ex. 33 | 1.47 | 69.85 | 46.7 |
| Ex. 34 | 1.03 | 44.35 | 38.3 |
| Com.ex.29 | 4.29 | 96.32 | 19.2 |
| Com.ex.30 | 2.75 | 92.90 | 20.7 |
| Com.ex.31 | 2.11 | 85.24 | 23.6 |
| Com.ex.32 | 0.74 | 31.00 | 10.8 |
| Com.ex.33 | 0.41 | 30.83 | 9.0 |

Examples 35 to 37 and Comparison Examples 34 to 38

The insoluble dietary fibers of the present invention (examples 35 to 37) and comparative insoluble dietary fibers (comparative examples 34 to 38) were prepared by the same method as that of example 21 except that corn husk powder with the average particle size of 1.0 mm was used, that the partial hydrolyzing treatment was conducted at the pH shown in Table 12 heating to 90 °c and keeping for 60 min, and that the drying method used was vacuums drying. The recovery rate after the partial hydrolyzing treatment and hemicellulase-solubilization rate of each example was shown in Table 12.

Table 12

| (90 °c, 60 min) | | | |
|---|---|---|---|
| | pH | Recovery rate (%) | Solubilization rate (%) |
| Ex. 35 | 2.16 | 80.31 | 30.0 |
| Ex. 36 | 1.75 | 72.70 | 42.3 |
| Ex. 37 | 1.43 | 56.93 | 47.6 |
| Com.ex.34 | 4.13 | 95.14 | 19.4 |
| Com.ex.35 | 2.74 | 89.79 | 21.4 |
| Com.ex.36 | 1.01 | 32.37 | 16.1 |
| Com.ex.37 | 0.71 | 29.13 | 9.3 |
| Com.ex.38 | 0.45 | 30.43 | 8.3 |

Examples 38 and 39 and Comparison Examples 39 to 44

The insoluble dietary fibers of the present invention (examples 38 to 39) and comparative insoluble dietary fibers (comparative examples 39 to 44) were prepared by the same method as that of example 21 except that corn husk powder with the average particle size of 1.0 mm was used, that the partial hydrolyzing treatment was conducted at the pH shown in Table 13 heating to 80 °c and keeping for 30 min, and that the drying method used was vacuums drying. The recovery rate after the partial hydrolyzing treatment and hemicellulase-solubilization rate of each example was shown in Table 13.

Table 13

| (80 °c, 30 min) | | | |
|---|---|---|---|
| | pH | Recovery rate (%) | Solubilization rate (%) |
| Ex. 38 | 1.00 | 71.10 | 47.4 |
| Ex. 39 | 0.73 | 55.17 | 47.6 |
| Com.ex.39 | 4.60 | 98.45 | 20.4 |
| Com.ex.40 | 2.70 | 96.56 | 22.2 |
| Com.ex.41 | 2.11 | 92.28 | 22.2 |
| Com.ex.42 | 1.76 | 87.35 | 22.9 |
| Com.ex.43 | 1.41 | 82.43 | 29.2 |
| Com.ex.44 | 0.44 | 34.77 | 20.6 |

Examples 40 to 42 and Comparison Examples 45 to 49

The insoluble dietary fibers of the present invention (examples 40 to 42) and comparative insoluble dietary fibers (comparative examples 45 to 49) were prepared by the same method as that of example 21 except that corn husk powder with the average particle size of 1.0 mm was used, that the partial hydrolyzing treatment was conducted at the pH shown in Table 14 heating to 80 °c and keeping for 90 min, and that the drying method used was vacuums drying. The recovery rate after the partial hydrolyzing treatment and hemicellulase-solubilization rate of each example was shown in Table 14.

Table 14

| (80 °c, 90 min) | | | |
|---|---|---|---|
| | pH | Recovery rate (%) | Solubilization rate (%) |
| Ex. 40 | 1.73 | 80.41 | 30.7 |
| Ex. 41 | 1.39 | 71.74 | 45.5 |
| Ex. 42 | 0.99 | 47.49 | 42.1 |
| Com.ex.45 | 4.34 | 95.56 | 18.4 |
| Com.ex.46 | 2.83 | 92.53 | 20.7 |
| Com.ex.47 | 2.21 | 87.13 | 21.6 |
| Com.ex.48 | 0.67 | 31.66 | 14.6 |
| Com.ex.49 | 0.43 | 29.91 | 10.1 |

Examples 43 to 45 and Comparison Examples 50 to 54

The insoluble dietary fibers of the present invention (examples 43 to 45) and comparative insoluble dietary fibers (comparative examples 50 to 54) were prepared by the same method as that of example 21 except that corn husk powder with the average particle size of 1.0 mm was used, that the partial hydrolyzing treatment was conducted at the pH shown in Table 15 heating to 80 °c and keeping for 120 min, and that the drying method used was vacuums drying. The recovery rate after the partial hydrolyzing treatment and hemicellulase-solubilization rate of each example was shown in Table 15.

Table 15

| (80 °c, 120 min) | | | |
|---|---|---|---|
| | pH | Recovery rate (%) | Solubilization rate (%) |
| Ex. 43 | 1.72 | 77.83 | 34.3 |
| Ex. 44 | 1.38 | 67.33 | 47.8 |
| Ex. 45 | 0.98 | 40.40 | 31.6 |
| Com.ex.50 | 4.29 | 95.71 | 18.9 |
| Com.ex.51 | 2.85 | 92.36 | 20.9 |
| Com.ex.52 | 2.23 | 85.55 | 22.7 |
| Com.ex.53 | 0.60 | 31.07 | 11.2 |
| Com.ex.54 | 0.42 | 29.85 | 9.1 |

Examples 46 and 47 and Comparison Examples 55 to 60

The insoluble dietary fibers of the present invention (examples 46 to 47) and comparative insoluble dietary fibers (comparative examples 55 to 60) were prepared by the same method as that of example 21 except that corn husk powder with the average particle size of 1.0 mm was used, that the partial hydrolyzing treatment was conducted at the pH shown in Table 16 heating to 80 °c and keeping for 150 min, and that the drying method used was vacuums drying. The recovery rate after the partial hydrolyzing treatment and hemicellulase-solubilization rate of each example was shown in Table 16.

Table 16

| (80 °c, 150 min) | | | |
|---|---|---|---|
| | pH | Recovery rate (%) | Solubilization rate (%) |
| Ex. 46 | 1.77 | 76.04 | 36.5 |
| Ex. 47 | 1.44 | 63.41 | 48.1 |
| Com.ex.55 | 4.38 | 94.42 | 17.3 |
| Com.ex.56 | 2.89 | 90.80 | 20.1 |
| Com.ex.57 | 2.22 | 82.70 | 23.6 |
| Com.ex.58 | 1.02 | 35.58 | 23.5 |
| Com.ex.59 | 0.73 | 29.48 | 7.7 |
| Com.ex.60 | 0.44 | 28.20 | 5.8 |

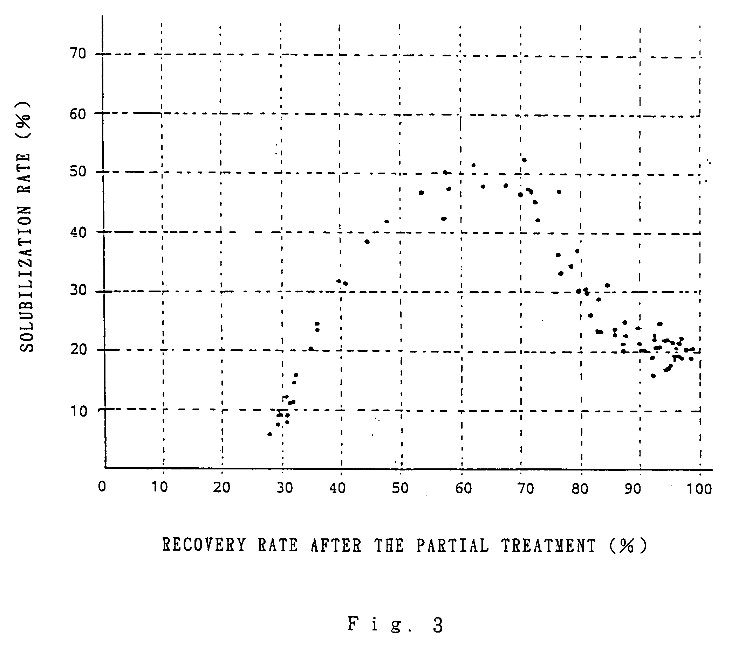

Figure 3 shows the relationship between the recovery rate after the partial hydrolyzing treatment and the hemicellulase-solubilization rate of examples 22 to 27 and comparative examples 7 to 60.

The dietary fibers of the present invention are water-insoluble dietary fibers of grain hull origin, but have 30 wt% or greater hemicellulase-solubilization rate because of the hemicellulose in it being hydrolyzed by the hemicellulase action of some intestinal bacteria in the alimentary canal and changed into soluble fibers.

Therefore, the dietary fibers of the present invention produce the effect of soluble dietary fibers of lowering blood cholesterol level, in addition to the effects of insoluble dietary fiber, mainly cellulose, which is not hydrolyzed by the hemicellulase action, of activating bowel movement and preventing large intestine cancers.

The dietary fibers of the present invention thus have both the effects of soluble dietary fibers and those of insoluble dietary fibers together and hence are very beneficial for preventing not only constipation but also hyperlipidemia and other various kinds of troubles due to the European and American life style.

The method of the present invention hydrolyzes the raw fibrous stuff derived from grain hull so that the recovery rate after a partial hydrolyzing treatment is 40 wt% to 80 wt%. The dietary fibers prepared by this method are water-insoluble, but have 30 wt% or greater hemicellulase-solubilization rate because of the hemicellulose in it being hydrolyzed by the hemicellulase action of some intestinal bacteria in the alimentary canal and changed into soluble fibers. Therefore, as described above, the dietary fibers prepared by this method have both the effects of soluble dietary fibers and those of insoluble dietary fibers together and hence are very beneficial for preventing not only constipation but also hyperlipidemia and other various kinds of troubles due to the European and American life style. The method of this invention makes it possible to produce such a useful dietary fibers easily and at low cost.

## Claims

1. Insoluble dietary fibers of grain or pulse hull origin, characterized in that
   - said insoluble dietary fibers are partially hydrolyzed insoluble dietary fibers,
   - said insoluble dietary fibers contain cellulose and hemicellulose,
   - said hemicellulose is bound to said cellulose, and
   - said insoluble dietary fibers have a solubilization rate by hemicellulase of equal to or greater than 30 wt% of the insoluble dietary fiber,
   the hemicellulase solubilization rate being defined as

$$\frac{\text{Weight of hemicellulase solubilized fraction}}{\text{Weight of insoluble fibers}} \times 100 \ (\%)$$

2. Insoluble dietary fibers as defined in claim 1, in which said grain or pulse is corn, wheat, rice or soybean.

3. Insoluble dietary fibers as defined in claim 1 or 2, in which said dietary fibers are dried.

4. Insoluble dietary fibers as defined in claim 1, 2 or 3 in which said dietary fibers are in the form of small particles.

5. Food containing insoluble dietary fibers of any one of claims 1-4.

6. Method for producing a dietary fiber according to claim 1 characterized by partially hydrolyzing a raw fibrous substance of grain or pulse hull origin so that the recovery rate after the partial hydrolyzing treatment is 40 wt% to 80wt%, and said partial hydrolyzing treatment is carried out at a pH of 3.0 or less.

7. Method for producing a dietary fiber as defined in claim 6, in which said partial hydrolyzing treatment is carried out at a temperature of 60°C to 120°C.

8. Method for producing a dietary fiber as defined in claim 6, in which said partial hydrolyzing treatment is carried out at a temperature of 60°C to 100°C.

**Patentansprüche**

1. Unlösliche Diätfasern von Getreide- oder Hülsenfruchthüllenursprung, dadurch gekennzeichnet, daß
   - diese unlöslichen Diätfasern partiell hydrolysierte unlösliche Diätfasern sind,
   - diese unlöslichen Diätfasern Cellulose und Hemicellulose enthalten,
   - die Hemicellulose an die Cellulose gebunden ist,
   - diese unlöslichen Diätfasern eine Solubilisierungsrate durch Hemicellulase von gleich oder größer 30 Gew.-% der unlöslichen Diätfasern haben,
   wobei die Hemicellulase-Solubilisierungsrate definiert ist als:

$$\frac{\text{Gewicht von Hemicellulase-solubilisierter Fraktion}}{\text{Gewicht von unlöslichen Fasern}} \times 100(\%)$$

2. Unlösliche Diätfasern nach Anspruch 1, worin dieses Getreide oder diese Hülsenfrüchte Mais, Weizen, Reis oder Sojabohnen ist/sind.

3. Unlösliche Diätfasern nach Anspruch 1 oder 2, worin diese Diätfasern getrocknet sind.

4. Unlösliche Diätfasern nach Anspruch 1, 2 oder 3, worin diese Diätfasern in Form von kleinen Teilchen vorliegen.

5. Nahrungsmittel, enthaltend unlösliche Diätfasern nach einem der Ansprüche 1 - 4.

6. Verfahren zur Herstellung einer Diätfaser nach Anspruch 1, dadurch gekennzeichnet, daß eine faserartige Rohsubstanz von Getreide- oder Hülsenfruchthüllenursprung partiell hydrolysiert wird, so daß die Gewinnungsrate nach der Behandlung der partiellen Hydrolyse 40 Gew.-% bis 80 Gew.-% beträgt, und daß diese Behandlung der partiellen Hydrolyse bei einem pH von 3,0 oder weniger durchgeführt wird.

7. Verfahren zur Herstellung einer Diätfaser nach Anspruch 6, in welchem diese Behandlung der partiellen Hydrolyse bei einer Temperatur von 60° C bis 120° C durchgeführt wird.

8. Verfahren zur Herstellung einer Diätfaser nach Anspruch 6, in welchem diese Behandlung der partiellen Hydrolyse bei einer Temperatur von 60° C bis 100° C durchgeführt wird.

**Revendications**

1. Fibres diététiques insolubles provenant de la balle de céréales ou de gousses de légumineuses, caractérisées en ce que
   - lesdites fibres diététiques insolubles sont des fibres diététiques insolubles partiellement hydrolysées,
   - lesdites fibres diététiques insolubles contiennent de la cellulose et de l'hémicellulose,
   - ladite hémicellulose est liée à ladite cellulose et
   - lesdites fibres diététiques insolubles présentent un taux de solubilisation par l'hémicellulase qui est supérieur ou égal à 30 % en poids des fibres diététiques insolubles, le taux de solubilisation par l'hémicellulase étant défini de la manière suivante :

$$\frac{\text{poids de la partie} \quad \text{solubilisée par l'hémicellulase}}{\text{poids de fibres insolubles}} \times 100\ (\%)$$

2. Fibres diététiques insolubles conformes à la revendication 1 où lesdits céréales ou légumineuses sont le maïs, le blé, le riz ou le soja.

3. Fibres diététiques insolubles conformes à la revendication 1 ou 2 qui sont des fibres diététiques séchées.

4. Fibres diététiques insolubles conformes à la revendication 1, 2 ou 3 se présentant sous forme de petites particules.

5. Aliments contenant les fibres diététiques insolubles conformes à une quelconque des revendications 1 à 4.

6. Procédé pour préparer des fibres diététiques conformes à la revendication 1, caractérisé en ce que l'on procède à l'hydrolyse partielle d'une substance fibreuse brute provenant de la balle de céréales ou de gousses de légumineuses de manière à ce que le taux de récupération après le traitement par hydrolyse partielle soit de 40 % en poids à 80 % en poids, et en ce que le traitement par hydrolyse partielle est réalisé à un pH inférieur ou égal à 3,0.

7. Procédé pour préparer des fibres diététiques conforme à la revendication 6, dans lequel ledit traitement par hydrolyse partielle est réalisé à une température comprise entre 60 °C et 120 °C.

8. Procédé pour préparer des fibres diététiques conforme à la revendication 6, dans lequel ledit traitement par hydrolyse partielle est réalisé à une température comprise entre 60 °C et 100 °C.

Fig. 1

St.F. ··· Standard Feeds

Fig. 2

St. F. ··· Standard Feeds

Fig. 3